# FASCICULE DE BREVET EUROPEEN

(11) **EP 2 222 950 B1**
(45) Date de publication et mention de la délivrance du brevet: **10.08.2016**
(21) Numéro de dépôt: 08868886.6
(22) Date de dépôt: 18.12.2008
(51) Int. Cl.: F02N 11/08, F02N 15/06

(54) **PROCEDE DE COMMANDE POUR DEMARREUR D'UN MOTEUR A COMBUSTION ET SON APPLICATION**
VERFAHREN ZUR STEUERUNG DER ZÜNDUNG EINES VERBRENNUNGSMOTORS UND ANWENDUNG DAVON
METHOD FOR CONTROLLING THE STARTER OF A COMBUSTION ENGINE AND APPLICATION THEREOF

(30) Priorité: 20.12.2007 FR 0708950
(43) Date de publication de la demande: 01.09.2010
(73) Titulaire: Renault S.A.S., 92100 Boulogne-Billancourt (FR)
(72) Inventeur: COUETOUX, Herve, F-91470 Les Molieres (FR); GUILLOZ, Nicolas, F-92140 Clamart (FR); SCHEFFGES, Olivier, F-92400 Courbevoie (FR)
(86) Numéro de dépôt international: PCT/EP2008/067893
(87) Numéro de publication internationale: WO 2009/083477

(56) Documents cités:
- EP-A- 1 041 277
- WO-A-2007/101770
- DE-A1- 10 005 005
- US-A1- 2004 017 086
- US-A1- 2007 084 429

## Description

La présente invention a pour objet un procédé de commande pour la mise en action d'un dispositif de commande destiné à être intégré dans un démarreur pour un moteur à combustion, le dispositif comprenant un solénoïde contrôlant la position d'un pignon du démarreur adapté à s'engager dans une couronne dentée liée cinématiquement avec un vilebrequin dudit moteur, ledit pignon pouvant être entraîné par un moteur électrique du démarreur en fermant une première voie commutée d'alimentation entre une batterie et le démarreur, le dispositif comprenant encore un relais auxiliaire et au moins une résistance de puissance mis en série réalisant une deuxième voie commutée d'alimentation en parallèle avec ladite première voie commutée et permettant d'alimenter par un courant d'alimentation moindre que le courant maximal le moteur électrique du démarreur entraînant ledit pignon.

Cette invention s'inscrit dans le contexte de la technique automobile actuelle, notamment dans le cadre des démarreurs de moteurs thermiques possédant la fonctionnalité appelée communément « Stop & Start ». Cette fonctionnalité consiste à couper automatiquement le moteur lorsque la vitesse du véhicule est zéro, par exemple à l'arrêt à un feu rouge ou dans toute autre situation nécessitant l'arrêt du véhicule, le moteur étant par la suite relancé automatiquement lorsque l'utilisateur le sollicite de nouveau. Ceci a pour but de réduire la consommation du véhicule ainsi que la pollution qu'il génère. Pour réaliser cette fonction « Stop & Start » aussi appelée « S&S » sur un véhicule à moteur thermique, notamment sur une voiture, en conservant un réseau électrique de bord simple, normalement un réseau à 14V, il existe actuellement principalement deux possibilités fondées sur des organes de démarrage automobiles électromagnétiques. Soit on utilise un alterno-démarreur qui est une machine réversible placée sur la courroie du moteur soit on utilise un démarreur adapté à la fonction S&S au niveau puissance, bruit, usure, etc.. Ce genre de démarreur assure, lors de la phase de démarrage jusqu'à l'autonomie du moteur par les cycles de combustion, l'entraînement du vilebrequin du moteur thermique au moyen d'un pignon qui s'engrène sur la denture d'une couronne dentée montée sur le pourtour du volant moteur, l'engagement du pignon dans la couronne étant contrôlé par un solénoïde agencé dans le démarreur.

L'utilisation d'un démarreur S&S évoquée ci-dessus offre un très net potentiel de réduction de coût par rapport à un alterno-démarreur et est intéressant notamment pour des constructeurs automobiles généralistes, soucieux du ratio coût-prestation de leurs produits. Ce genre de démarreur a été amélioré dans le passé, par exemple au niveau de la commande du courant de son solénoïde, pour laquelle un hacheur électronique tel qu'exposé dans les documents DE 10 034 779 et US 5,818,679 a été proposé, ceci afin de procéder à un engagement progressif du pignon en deux étapes, voir par exemple les documents US 6,104,157 et US 6,323,562. De même, un solénoïde ayant une mono-bobine à deux étages a été proposé pour un tel démarreur.

Un dispositif de commande destiné à être intégré dans un tel démarreur et correspondant au genre mentionné ci-dessus a par ailleurs été mis au point par la demanderesse et fait l'objet de la demande de brevet FR 0 606 740. Ce dispositif de commande permet de limiter la puissance consommée par le démarreur électrique lors du démarrage du moteur à combustion, ceci en réalisant un écrêtage du courant lors de la mise sous tension du démarreur.

Actuellement, les constructeurs automobiles cherchent à encore améliorer ce genre de démarreurs « Stop & Start », en particulier du fait qu'il serait souhaitable de disposer en supplément d'une fonction appelée "reflex-start". La fonction "reflex-start » consiste à relancer le moteur par l'organe de démarrage alors que le vilebrequin du moteur, contrairement au cas d'un démarrage habituel, ne s'est pas immobilisé, suite à une succession rapide d'ordres, par exemple suite à un arrêt puis un redémarrage en moins d'une seconde. Ce genre de situation peut notamment se produire en cas de l'immobilisation d'une voiture à un feu rouge venant de passer au vert, lors d'un changement d'allure en rentrant sur un rond-point ou à un cédez-le-passage, etc.. Le système alterno-démarreur précité permet de réaliser la fonction "reflex-start", du fait que le couplage par courroie de la machine électrique réversible avec le vilebrequin du moteur assure naturellement la synchronisation du régime de rotation de la machine avec le vilebrequin, au rapport d'entraînement près. Il suffit donc d'alimenter la machine électrique pour fournir immédiatement, c'est-à-dire dès l'établissement des courants dans la machine électrique, un couple d'entraînement au moteur thermique. Mais, comme mentionné ci-dessus, le coût d'un alterno-démarreur reste élevé par rapport à un démarreur S&S, poussant alors les constructeurs automobiles à trouver une solution alternative.

Par contre, les démarreurs S&S actuels respectivement leurs dispositifs de commande ne permettent pas de réaliser une telle fonction "reflex-start" du fait que ceci nécessite une synchronisation des vitesses de rotation du pignon et de la couronne avant leur engagement mutuel, le moteur respectivement le vilebrequin tournant encore dans cette constellation. Un démarreur équipé d'un solénoïde lanceur habituel n'alimente en effet le moteur électrique entraînant ledit pignon du démarreur que lorsque le noyau du solénoïde est en fin de course, c'est-à-dire quand le pignon est engagé ou sinon dans une position dent contre dent avec ladite couronne dentée suivie d'un engagement. Une opération d'engagement du pignon sur une couronne en rotation risque de produire un rebond des dents du pignon contre la denture de la couronne avec des effets sonores et d'usure voire de casse de dents, ce qui est inacceptable.

Une solution est proposée dans le document WO 2007/101 770 A1.

Par conséquent, le but de la présente invention est d'obvier aux inconvénients précités des systèmes actuels de démarrage et de mettre à disposition un démarreur Stop & Start respectivement un procédé de commande pour un tel démarreur avec la possibilité de faire des "reflex-start", ceci en ayant recours à des moyens techniques simples, notamment moins complexe qu'un alterno-démarreur, sans faire appel à une électronique de puissance compliquée pour piloter l'organe de démarrage, et tout en restant compatible avec un véhicule automobile équipé d'une architecture de distribution électrique conventionnelle.

Afin de réaliser un démarreur Stop & Start avec la possibilité de faire des "reflex-start", la présente invention propose un procédé de commande selon la revendication 1 pour la mise en action d'un dispositif de commande du genre susmentionné, le procédé comprenant notamment les étapes de
- commuter ledit relais auxiliaire situé le long de ladite deuxième voie commutée d'alimentation électrique afin d'accélérer le pignon du démarreur en fournissant un courant moindre que le courant maximal au moteur électrique du démarreur entraînant ledit pignon,
- déterminer la vitesse de rotation de la couronne dentée liée cinématiquement avec le vilebrequin dudit moteur,
- déterminer la durée de la phase d'accélération du pignon afin d'obtenir une vitesse de rotation dudit pignon correspondant à la vitesse de rotation de ladite couronne,
- une fois les vitesses de rotation dudit pignon et de ladite couronne étant synchronisées, réaliser l'engagement dudit pignon du démarreur dans ladite couronne du moteur en alimentant le solénoïde de manière appropriée à son type,
- commuter ladite première voie commutée d'alimentation afin de fournir le courant maximal au moteur électrique du démarreur entraînant ledit pignon pour réaliser le démarrage du moteur,
- une fois le moteur à combustion étant autonome par les combustions, réaliser le désengagement dudit pignon du démarreur avec ladite couronne du moteur et couper toute alimentation au moteur électrique du démarreur.

Par ces mesures, on obtient un démarreur S&S dont le pignon peut être mis en rotation avant qu'il soit engagé dans la couronne dentée du moteur thermique, afin de synchroniser les vitesses de rotation de ces éléments avant leur engagement. De plus, du fait de l'utilisation d'un courant moindre par rapport au courant maximal utilisé pour un démarrage habituel, cette phase d'accélération du pignon ne charge pas autant le réseau de bord du véhicule que le démarrage normal et réduit les contraintes électro-mécaniques sur le démarreur, ce qui est favorable au niveau sonore et de l'usure du dispositif.

Ce procédé peut encore être amélioré en apportant un certain nombre de corrections lors de la détermination de différents paramètres, par exemple en déterminant la vitesse de rotation de ladite couronne dentée en tenant compte des oscillations de la vitesse de rotation du vilebrequin du moteur dues aux cycles de compression et de détente par une correction correspondante, cette correction pouvant être proportionnelle avec la période desdites oscillations. De même, la durée de la phase d'accélération du pignon peut être déterminée en utilisant soit un tableau comportant des temps d'accélérations associés à la vitesse correspondante du pignon du démarreur soit un modèle physique du démarreur exploité par l'électronique de pilotage, ceci en tenant compte des facteurs influents sur le temps de montée en régime du démarreur, comme la tension de l'alimentation électrique, la température du démarreur, l'état de la batterie, et l'âge du démarreur.

Par ailleurs, avant de réaliser l'engagement du pignon du démarreur dans la couronne dentée du moteur en alimentant le solénoïde, de préférence, le relais auxiliaire situé le long de ladite deuxième voie commutée d'alimentation est ouvert afin de réaliser cet engagement sous couple nul.

De préférence, les étapes de réaliser l'engagement dudit pignon du démarreur dans ladite couronne du moteur et de commuter ladite première voie commutée d'alimentation sont réalisées par l'intermédiaire d'un solénoïde à deux étages.

Ainsi, le procédé de commande pour un démarreur du type « Stop & Start » décrit ici permet de réduire très nettement le coût d'un démarreur incorporant la fonction "reflex-start" par rapport aux alterno-démarreurs existants, tout en permettant d'assurer des performances équivalentes, notamment au niveau de la possibilité de faire un "reflex-start" et de la rapidité des redémarrages, ceci en réduisant simultanément la complexité du dispositif utilisé et en minimisant les effets perturbants sur le réseau électrique de bord ainsi que les stress électro-mécaniques sur le démarreur lors des redémarrages du moteur thermique.

D'autres avantages ressortent des caractéristiques exprimées dans les revendications dépendantes et de la description exposant ci-après l'invention plus en détail à l'aide de dessins.

Les dessins annexés illustrent schématiquement et à titre d'exemple une forme d'exécution de l'invention.
La figure 1 représente la vitesse de rotation du vilebrequin d'un moteur à combustion en fonction du temps lors d'un arrêt normal.
La figure 2 est une vue schématique d'une forme d'exécution d'un dispositif de commande selon la présente invention.
La figure 3 représente la vitesse de rotation du vilebrequin du moteur ainsi que du pignon du démarreur en fonction du temps lors d'un reflex-start réalisé avec un démarreur selon la présente invention.
La figure 4 montre une estimation de la vitesse de rotation du vilebrequin en fonction du temps suite à l'arrêt du moteur.

L'invention va maintenant être décrite en détail en référence aux dessins annexés qui illustrent, à titre d'exemple, une forme d'exécution de l'invention.

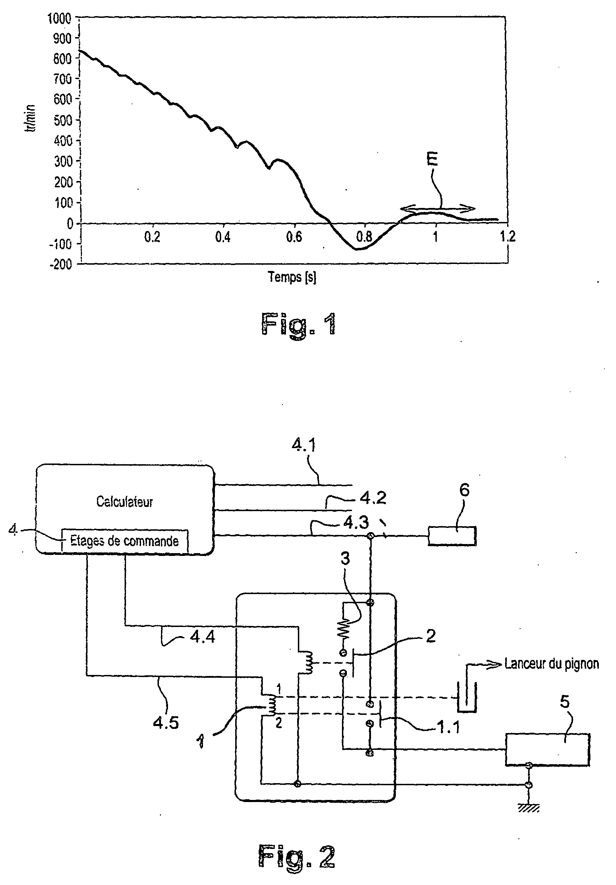

La figure 1 montre la vitesse de rotation du vilebrequin d'un moteur à combustion en fonction du temps lors d'un arrêt normal et permet de visualiser que la zone d'engagement E du pignon d'un démarreur conventionnel avec la couronne dentée liée cinématiquement avec un vilebrequin d'un moteur à combustion se situe habituellement, c'est-à-dire lors d'un démarrage normal, dans une phase où le vilebrequin est déjà ou presqu'immobile, avec une vitesse de rotation de 20-40 tours/min au maximum. Dans ces conditions, un engagement du pignon dans la couronne dentée peut être réalisé sans risque, tel que ceci est fait actuellement dans un démarreur conventionnel.

En revanche, dans le cas d'un reflex-start tel que mentionné dans l'introduction et désiré comme fonction supplémentaire pour un démarreur Stop & Start, cette condition n'est pas remplie du fait que le moteur respectivement son vilebrequin n'est pas encore au repos. La présente invention propose alors une solution pour un dispositif et un procédé de pilotage électromécanique de l'alimentation électrique d'un démarreur Stop & Start qui puisse réaliser un tel reflex-start lorsque le vilebrequin du moteur se trouve encore en rotation avec une vitesse assez élevée.

Dans une forme d'exécution telle qu'illustrée à la figure 2, le dispositif de commande destiné à être intégré dans un démarreur 5 pour un moteur à combustion selon la présente invention comprend un solénoïde 1 contrôlant la position d'un pignon du démarreur 5 qui est, comme c'est habituellement le cas, adapté à s'engager dans une couronne dentée liée cinématiquement avec un vilebrequin dudit moteur. Le pignon peut être entraîné par un moteur électrique du démarreur 5 en fermant une première voie commutée d'alimentation électrique entre une batterie 6 et le démarreur 5, le moteur électrique étant alors alimenté par un courant maximal afin d'obtenir un démarrage rapide du moteur thermique. De plus, le dispositif comprend un relais auxiliaire 2 et au moins une résistance de puissance 3 mis en série réalisant une deuxième voie commutée d'alimentation électrique en parallèle avec ladite première voie commutée et permettant d'alimenter par un courant d'alimentation moindre que le courant maximal le moteur électrique du démarreur 5 entraînant ledit pignon. Là figure 2 montre schématiquement que dans cette forme d'exécution ledit solénoïde 1 est un solénoïde à deux étages. Dans ce cas, l'alimentation de la bobine du solénoïde 1 à un premier niveau de courant, indiqué par le chiffre 1 à coté de ladite bobine à la figure 2, permet de contrôler la position dudit pignon du démarreur 5, c'est-à-dire son engagement ou désengagement avec la couronne dentée liée au vilebrequin tel que symbolisé par une flèche à la figure 2, et l'alimentation de la bobine du solénoïde 1 à un deuxième niveau de courant, indiqué par le chiffre 2 à coté de ladite bobine à la figure 2, permet d'alimenter par le courant maximal ledit moteur électrique du démarreur 5 en fermant un contacteur de puissance 1.1 se trouvant le long de ladite première voie commutée d'alimentation, le moteur électrique entraînant alors le pignon et par son intermédiaire la couronne dentée ainsi que le vilebrequin du moteur. Le dispositif de commande de puissance est alors principalement constitué de l'association d'un solénoïde lanceur à deux étages, d'un relais de puissance et d'au moins une résistance de puissance, ainsi que d'une électronique de pilotage correspondante de la bobine du solénoïde lanceur et de la bobine du relais auxiliaire.

Afin de décrire ces parties plus en détail, il est à noter qu'un solénoïde lanceur à deux étages permet d'obtenir deux positions alimentées stables de son noyau mobile en fonction du courant alimentant la mono-bobine, tandis qu'un lanceur classique comporte une bobine d'appel et une bobine de maintien et réalise de manière indissociable l'engagement du pignon et la fermeture du contacteur de puissance. Au repos, c'est-à-dire sans alimentation électrique de la bobine du solénoïde 1, le pignon n'est alors pas engagé dans la couronne dentée du moteur et le contacteur de puissance 1.1 du démarreur est ouvert. Dans la première position intermédiaire, correspondant à un premier niveau de courant, le pignon est engagé avec la couronne dentée, mais le contacteur 1.1 n'est pas fermé, ceci pouvant constituer un état stable. Finalement, dans la deuxième position, la course du noyau du solénoïde est maximale et le pignon est engagé et le contacteur 1.1 est fermé, de manière à ce que le démarreur entraîne le vilebrequin en vue du démarrage du moteur. Il reste à remarquer ici qu'un solénoïde lanceur mono-bobine à deux étages ne constitue pas en tant que tel un aspect nouveau, mais qu'en revanche son intégration dans un dispositif selon la présente invention permet de le simplifier, notamment de réduire le nombre de composants et donc son coût et sa masse. Le pignon étant engagé ou non dans la couronne dentée, la fermeture du relais auxiliaire 2 permet toujours d'entraîner en rotation le pignon.

En ce qui concerne les composants supplémentaires par rapport à un démarreur classique comportant un solénoïde lanceur que sont le relais auxiliaire 2 et la ou les résistances de puissance 3, leur montage est préférentiellement effectué sur le corps du démarreur 5. Le relais auxiliaire peut par exemple être monté aux côtés du solénoïde 1 sur le nez qui fait office de bride de fixation du démarreur 5 qui est une pièce spécifique à chaque application. La ou les résistances de puissance 2 peuvent par exemple être réalisées à la surface du corps du démarreur, pour bénéficier de l'inertie thermique de celui-ci pour l'évacuation de la chaleur transitoirement dissipée. Un premier mode de réalisation peut être à base de rubans métalliques interconnectés et plaqués contre le corps en intercalant un film isolant électrique, mais conducteur thermique. Un autre mode de réalisation intéressant est par dépose d'une encre conductrice sur la surface du corps isolée au moyen d'une couche diélectrique isolante. Ce mode de réalisation est connu sous le nom d'élément chauffant à couche épaisse. Un tel agencement permet d'avoir un ensemble complet sans avoir à faire des opérations de connections électriques supplémentaires lors de l'installation du démarreur Stop&Start sur le moteur thermique et dans le véhicule en cours de fabrication.

Tel que représenté à la figure 2, les interconnections électriques peuvent être réalisées, dans un dispositif selon la présente invention, de la manière suivante. Le contacteur de puissance 1.1 du solénoïde 1 à deux étages sert à réaliser une première voie commutée d'alimentation électrique en direct entre la batterie 6 et le moteur électrique du démarreur Stop & Start 5. Le relais auxiliaire 2 en série avec au moins une résistance de puissance 3 crée une deuxième voie d'alimentation électrique entre la batterie 6 et le moteur électrique, mis en parallèle par rapport à la première voie d'alimentation et caractérisée par un courant d'alimentation moindre que le courant maximal fourni lors d'une alimentation en direct. Il est ainsi possible d'écrêter le pic de courant au démarrage, notamment lors de la phase d'accélération du pignon en vue de la synchronisation de sa vitesse de rotation avec celle de la couronne dentée, et ainsi de réduire l'effondrement de la tension du réseau de bord lors d'un redémarrage du type reflex-start.

Comme mentionné brièvement ci-dessus, le dispositif de commande comprend également une électronique de pilotage 4 adaptée pour commander la bobine du solénoïde 1 et la bobine du relais auxiliaire 2 pour contrôler la position du pignon du démarreur 5 et de manière à alimenter le moteur électrique du démarreur 5 soit par la première voie commutée d'alimentation entre la batterie 6 et le démarreur 5 par le courant maximal soit par la deuxième voie commutée d'alimentation par un courant moindre. A cet effet et comme indiqué schématiquement à la figure 2, les étages de commande de l'électronique de pilotage 4 possèdent notamment une première entrée 4.1 pour la mesure de la position du vilebrequin du moteur, une deuxième entrée 4.2 pour la lecture des informations concernant l'état thermique du moteur et du démarreur, et une troisième entrée 4.3 pour un signal reflétant l'état de la tension de la batterie 6. De plus, les étages de commande possèdent au moins une première sortie de commande 4.4 de la bobine du relais auxiliaire 2 et une deuxième sortie de commande 4.5 de la bobine du solénoïde 1. L'électronique de pilotage 4 des bobines du solénoïde lanceur et du relais auxiliaire peut préférentiellement contrôler le courant desdites bobines au moyen d'étages de commande utilisant des hacheurs aussi appelés PWM. En particulier, ce genre de hacheur peut être utilisé pour améliorer le temps de réponse des deux actuateurs mis en oeuvre dans le présent dispositif. Les étages de commande sont préférentiellement intégrés à un calculateur électronique prévu dans l'architecture du véhicule, qui pourra regrouper d'autres fonctions préexistantes. Alternativement, en fonction des circonstances technico-économiques du projet automobile spécifique, les étages de commandes peuvent aussi être montés sur le démarreur 5 avec tout ou partie de l'électronique dédiée à la fonction Stop&Start respectivement notamment à la fonction reflex-start.

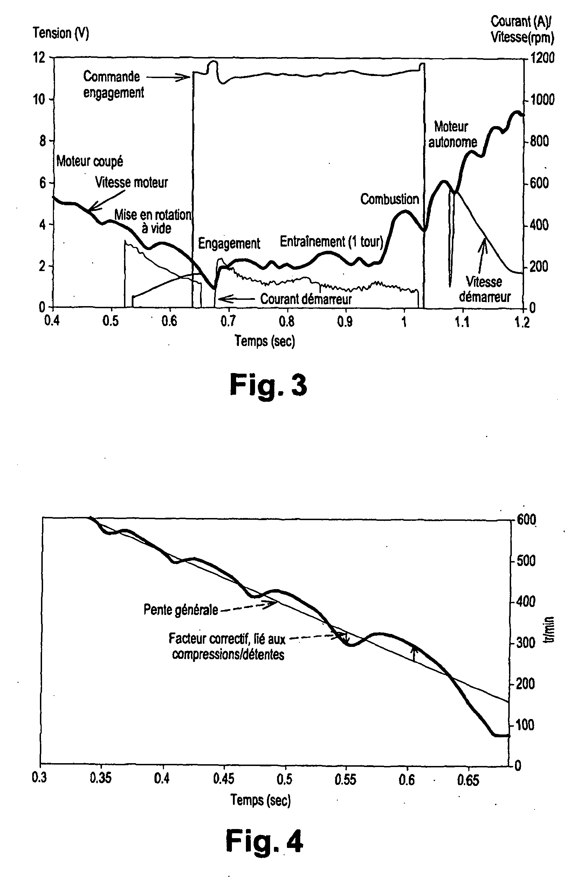

Afin de se tourner maintenant vers le fonctionnement d'un tel dispositif de commande respectivement d'un démarreur correspondant, celui-ci peut être facilement compris en décrivant le procédé de commande selon la présente invention, cette description se référant de façon globale à la figure 3.

En effet, dans une situation nécessitant un "reflex-start" tel que mentionnée dans l'introduction, il existe généralement deux possibilités: Soit la vitesse du vilebrequin du moteur thermique au moment où l'ordre de redémarrage est connu est suffisante pour permettre un redémarrage du moteur sur son inertie, en réactivant l'injection et l'allumage pour un moteur essence. Dans ce cas, le démarreur n'a pas lieu d'être sollicité; le démarreur est sollicité pour les régimes inférieurs strictement à la vitesse à vide, soit typiquement de l'ordre de 300 à 600 tr/mn ramené au vilebrequin pour un démarreur automobile à excitation par aimants permanents. Soit le régime du moteur a chuté en dessous d'un certain seuil et on considère qu'il faut l'assister à l'aide du démarreur pour le relancer. La phase d'entraînement doit alors avoir lieu le plus rapidement possible, pour limiter les désagréments de conduite ressentis par le conducteur voire pour éviter des problèmes de sécurité lié à l'absence de couple du moteur thermique afin d'assurer la mobilité du véhicule. Dans ce cas, la difficulté à résoudre réside, comme déjà mentionné ci-dessus, dans le fait que l'engagement du pignon doit être réalisé sans délai sur une couronne en rotation. A l'aide d'une action de pré-engagement anticipé entre le pignon du démarreur 5 et la couronne dentée liée cinématiquement au vilebrequin du moteur en début de la phase d'arrêt complet du moteur, il est possible de se tenir prêt avec une liaison déjà sécurisée lors d'une demande de redémarrage du moteur.

Afin de réaliser cet engagement en vue d'un reflex-start, le procédé de commande selon la présente invention pour la mise en action d'un dispositif de commande d'un démarreur électrique comprend d'abord une première étape qui consiste en le fait de commuter le relais auxiliaire 2 situé le long de ladite deuxième voie commutée d'alimentation afin d'accélérer le pignon du démarreur 5, ceci en fournissant un courant moindre que le courant maximal au moteur électrique du démarreur 5 entraînant ledit pignon. En d'autres termes, le pignon du démarreur 5 est mis en rotation « à vide», c'est-à-dire avant son engagement avec la couronne dentée. Du fait que le moteur électrique du démarreur 5 est alimenté à travers une résistance ballast, l'effondrement du réseau de bord est fortement atténué. Evidemment, le démarreur est alimenté ici plus pour créer une vitesse de rotation du pignon que pour fournir un couple important, contrairement au cas d'un démarrage classique où il faut vaincre le couple de compression du moteur thermique. Le fait d'augmenter l'impédance de la source d'alimentation par l'insertion de la résistance ballast dans le circuit a donc un effet faible sur la mise en rotation du pignon du démarreur, puisque le courant demandé par le démarreur est moindre « à vide ».

Ensuite, lors d'une deuxième étape du procédé, la vitesse de rotation de la couronne dentée liée cinématiquement avec un vilebrequin dudit moteur doit être déterminée. En général, le procédé de commande piloté par l'électronique de pilotage 4 du dispositif utilise des informations extérieures parvenant par les entrées 4.1, 4.2 et 4.3 mentionnées ci-dessus, notamment concernant la position du vilebrequin du moteur. La position du vilebrequin est classiquement une information déjà acquise par le calculateur d'injection par le biais d'un capteur dit PMH (point mort haut) qui lit le passage des dents d'une cible montée sur le volant moteur et délivre typiquement une soixantaine d'impulsions par tour de vilebrequin. De préférence, un capteur PMH fonctionnant aussi à une très basse vitesse de rotation, notamment aussi à un régime bien inférieur au régime de ralenti du moteur, et capable de détecter correctement les inversions de rotation du vilebrequin est utilisé dans le cadre de la présente invention.

En détail, pour déterminer la vitesse de rotation cible à atteindre par le pignon, on se sert du capteur de PMH pour connaître la vitesse de la couronne du moteur thermique de la manière suivante. A chaque passage d'une nouvelle dent de la cible sous le capteur, on actualise la vitesse de rotation réelle en inversant le temps écoulé depuis la dent précédente. Avec une série de points de vitesse de rotation relevés sur quelques cycles, le calculateur détermine la pente générale de la décroissance de la vitesse de rotation du vilebrequin, qui est d'ailleurs une image des frottements dissipatifs dans le moteur thermique, un exemple pour une telle pente générale étant illustré à la figure 4. Cette droite permet alors d'estimer la valeur de la vitesse de rotation du vilebrequin à un instant futur. Par contre, dans les faibles régimes, sans combustion, la vitesse de rotation du vilebrequin oscille sensiblement à chaque passage de Point Mort Haut, notamment de façon à ce qu'on remarque une chute locale de la vitesse de rotation dans la compression et une hausse locale de la vitesse de rotation dans la détente. De ce fait, afin d'affiner la prédiction de la vitesse de rotation du vilebrequin, il est préférable d'ajouter un terme correctif pour tenir compte des compressions et détentes, ce qui est possible en se servant de l'information de la position du vilebrequin pour déterminer le terme à ajouter sur les phases de détentes et le terme à soustraire sur les phases de compressions. Cette correction est également illustrée, à titre d'exemple, à la figure 4. De préférence, la correction peut être réalisée en utilisant un table de facteurs multiplicatifs indexés en fonction de l'angle du vilebrequin, les facteurs servant à pondérer la période mesurée entre deux dents de la cible du volant moteur. De manière complémentaire, la correction peut également être amplifiée de façon proportionnelle avec la période des oscillations pour tenir compte de l'augmentation des oscillations avec la diminution de la vitesse de rotation. Les organes du moteur thermique tels que le boîtier papillon, l'étouffoir et les auxiliaires comme le compresseur ou l'alternateur sont activés dans un état prédéterminé, de manière à minimiser leur influence sur l'allure de la diminution de la vitesse de rotation.

Une fois la vitesse de rotation cible à atteindre par le pignon étant connue, une troisième étape du procédé sert à déterminer, par l'intermédiaire de l'électronique de pilotage 4, la durée de la phase d'accélération du pignon qui est nécessaire pour obtenir une vitesse de rotation dudit pignon correspondant à la vitesse de rotation de la couronne dentée, au rapport d'entraînement près. Le calculateur de l'électronique de pilotage 4 détermine la durée de la phase d'alimentation du moteur électrique de manière à avoir une vitesse de rotation du pignon la plus proche possible de celle de la couronne à l'issue de cette phase d'accélération en vue d'un engagement du pignon avec la couronne. De préférence, la vitesse de rotation du pignon peut être légèrement inférieure à celle de la couronne. En effet, d'une part, la vitesse de rotation de la couronne diminue globalement avec le temps, et, d'autre part, la couronne prenant le pignon à une vitesse de rotation légèrement supérieure à celle du rotor du démarreur, au rapport d'entraînement près du réducteur du démarreur si il y en a un, la roue libre du démarreur est susceptible de désaccoupler le pignon du rotor. Une inertie moindre ramenée sur le pignon est alors un facteur facilitant la mise en place du pignon dans la couronne.

Pour fixer la durée de ladite phase d'alimentation initiale du moteur électrique, on utilise de préférence une table de données intégrée dans le calculateur électronique qui comprend une série de temps d'alimentation du moteur électrique, qui sont des instants échantillonnés dont une période typique est de l'ordre de 10 millisecondes, auxquels sont associés les vitesses de rotation correspondantes du pignon du démarreur. Cette table est normalement obtenue à partir de la mesure en laboratoire sur un lot représentatif de la production de démarreurs. Alternativement, il est possible d'utiliser un modèle physique du démarreur que sera exploité dans le calculateur.

Aussi pendant cette étape, l'électronique de pilotage 4 peut utiliser des informations extérieures parvenant par les entrées 4.1, 4.2, 4.3 susmentionnées, comme la tension du réseau de bord et une information sur l'état thermique du démarreur ou du moteur. La tension est aisément mesurable et ainsi disponible dans le calculateur. La température du démarreur est de préférence estimée plutôt que mesurée avec un capteur qui impliquerait un surcoût. Une telle estimation peut par exemple utiliser la température extérieure et la température du moteur thermique qui sont en général déjà mesurées sur la voiture, la durée écoulée du trajet, la puissance dissipée dans le moteur électrique du démarreur calculée à partir du courant effectif dans les derniers redémarrages réalisés ainsi que la vitesse moyenne du véhicule. Il est ainsi possible de tenir compte des facteurs influents sur le temps de montée en régime du démarreur que sont entre autres la tension d'alimentation, la température du démarreur, l'état de la batterie reflété par' exemple par sa résistance interne. Une correction adéquate peut alors être appliquée en utilisant soit plusieurs tables réalisées à différentes tensions et/ou températures soit des fonctions correctrices à appliquer à la table principale, ceci afin d'obtenir la durée de la phase d'accélération du pignon avec une précision élevée.

Après avoir synchronisé les vitesses de rotation du pignon et de la couronne, au rapport d'entraînement près, l'engagement du pignon du démarreur 5 dans la couronne dentée du moteur est réalisé en alimentant le solénoïde 1, lors d'une quatrième étape du procédé. Le noyau mobile du solénoïde emmène alors, comme habituellement dans un démarreur S&S, le pignon dans une position où il engrène avec la couronne dentée, avec la différence notable que les deux éléments sont en rotation du fait du moment anticipé de cet engagement.

Dans une forme d'exécution préférée du procédé de commande, une fois que le calculateur de l'électronique de pilotage a fixé le temps requis de fermeture du relais auxiliaire 2 pour atteindre la synchronisation des vitesses de rotation du pignon et de la couronne, l'alimentation du moteur électrique du démarreur 5 est coupée, après l'écoulement de ce temps, pour réaliser l'engagement du pignon sous un couple nul du démarreur afin de réduire les contraintes sur les dentures au moment de l'engagement. L'alimentation du solénoïde 1 correspondant à l'engagement du pignon ainsi que l'ouverture du relais auxiliaire 2 doivent être anticipées pour tenir compte des temps de réaction de ces actuateurs électromécaniques. L'utilisation d'un hacheur électronique à réaction rapide pour le pilotage des bobines correspondantes permet de rendre plus robuste la commande en réduisant le besoin d'anticipation des ordres.

Une cinquième étape du procédé prévoit ensuite de commuter ladite première voie commutée d'alimentation afin de fournir le courant maximal au moteur électrique du démarreur 5 entraînant ledit pignon pour réaliser le démarrage du moteur. En effet, se retrouvant dans la situation d'un pignon engagé dans la couronne suite à la quatrième étape du procédé, on rétablit ainsi le courant dans le démarreur pour la phase classique d'entraînement du moteur thermique par le démarreur, dès lors que l'on a pratiqué une interruption de l'alimentation du démarreur juste avant l'engagement du pignon tel que suggéré dans la forme d'exécution préférée de la quatrième étape du procédé mentionnée ci-dessus. Dans la situation où le démarreur est couplé au moteur thermique, il est en effet préférable d'utiliser l'alimentation du démarreur sous puissance maximale. Dès lors que la vitesse du démarreur connue à la suite de l'étape de mise en rotation" à vide" et/ou connue par le capteur PMH, puisque maintenant le pignon est engrené dans la couronne, est située au dessus d'un seuil minimal correspondant à un niveau minimal de la tension de la force contre-électromotrice du démarreur, le solénoïde lanceur à deux étages 1 est par conséquent alimenté pour avoir la course maximale du noyau mobile du solénoïde 1 et ainsi pour activer le contacteur de puissance 1.1. Le démarreur 5 entraîne alors par l'intermédiaire du pignon le vilebrequin du moteur thermique en rotation en vue du démarrage du moteur. Le cas échéant, la vitesse minimale du démarreur peut être obtenue par une phase préliminaire de la cinquième étape d'alimentation par la voie auxiliaire d'une durée suffisante pour atteindre ledit seuil minimal.

Finalement, une fois que le moteur à combustion est autonome par les combustions, lors d'une sixième étape du procédé, le désengagement du pignon du démarreur 5 de la couronne dentée du moteur est réalisé et toute alimentation au moteur électrique du démarreur 5 est coupée, le moteur thermique ayant redémarré. On peut noter ici que la durée de la phase d'entraînement devrait être la plus courte possible, ce qui peut être obtenu par des stratégies adaptées appliquées dans le calculateur d'injection du moteur. Typiquement, cette phase d'entraînement est d'environ une fraction de tour du vilebrequin.

La succession des évènements précités dès la coupure du moteur est représenté à la figure 3 à l'aide de la représentation de la vitesse de rotation du vilebrequin du moteur et du pignon du démarreur en fonction du temps lors d'un reflex-start réalisé avec un démarreur selon la présente invention. Ainsi, on voit que pendant que la vitesse de rotation du vilebrequin diminue suite à la coupure de l'injection du moteur thermique, à un moment donné le moteur électrique du démarreur est alimenté par un courant spécifique produisant alors la rotation de plus en plus rapide de son pignon lors de sa mis en rotation à vide. Les vitesses de rotation du pignon et du vilebrequin s'approchent pour être enfin synchronisées. A ce moment là, le courant - normalement plus faible que le courant maximal, mais pas nécessairement - est, de préférence, coupé afin de réaliser l'engagement du pignon du démarreur avec la couronne dentée liée cinématiquement avec le vilebrequin, du moteur thermique, ceci à l'aide du solénoïde à deux étages. Les vitesses de rotation du pignon et du vilebrequin diminuent alors légèrement, puis le moteur électrique du démarreur est de nouveau alimenté, normalement avec le courant maximal, afin d'entraîner le vilebrequin par le démarreur. Finalement, la combustion de moteur thermique démarre et le courant du démarreur peut être coupé et le pignon peut être séparé de la couronne dentée, la rotation du pignon cessant alors pour être prêt pour un nouveau cycle de démarrage.

Comme le montre la description détaillée du dispositif de commande électromécanique voire de son électronique de pilotage 4 des bobines ainsi que du procédé selon la présente invention pour sa mise en action, le dispositif et le procédé mettent en oeuvre des moyens simples et peu couteux pour réaliser la fonction "reflex-start" sur un démarreur de type S&S. Le procédé selon la présente invention assure notamment des performances équivalentes par rapport à un alterno-démarreur, en particulier au niveau de la possibilité de faire un "reflex-start" et de la rapidité des redémarrages, ceci en minimisant les effets perturbants sur le réseau électrique de bord lors des redémarrages du moteur thermique, en réduisant simultanément la complexité du dispositif utilisé et en minimisant par conséquent le coût correspondant d'un tel démarreur.

Il est évident que le dispositif respectivement le procédé de commande selon la présente invention ainsi qu'un démarreur correspondant peuvent être utilisé sur tout véhicule à moteur à combustion interne. De préférence, son utilisation est prévue dans des automobiles, des camions ou des moyens de transport public tel qu'un bus étant équipé d'un moteur thermique.

## Revendications

1. Procédé de commande pour la mise en action d'un dispositif de commande destiné à être intégré dans un démarreur (5) pour un moteur à combustion, le dispositif comprenant un solénoïde (1) contrôlant la position d'un pignon du démarreur (5) adapté à s'engager dans une couronne dentée liée cinématiquement avec un vilebrequin dudit moteur, ledit pignon pouvant être entraîné par un moteur électrique du démarreur (5) en fermant une première voie commutée d'alimentation entre une batterie (6) et le démarreur (5), le dispositif comprenant encore un relais auxiliaire (2) et au moins une résistance de puissance (3) mis en série réalisant une deuxième voie commutée d'alimentation en parallèle avec ladite première voie commutée et permettant d'alimenter par un courant d'alimentation moindre que le courant maximal le moteur électrique du démarreur (5) entraînant ledit pignon, **caractérisé par le fait que** le procédé, suite à une coupure automatique du moteur lorsque la vitesse du véhicule est zéro, comprend les étapes de
- commuter ledit relais auxiliaire (2) situé le long de ladite deuxième voie commutée d'alimentation afin d'accélérer le pignon du démarreur (5) en fournissant un courant moindre que le courant maximal au moteur électrique du démarreur (5) entraînant ledit pignon,
- déterminer de manière prédictive la vitesse de rotation de la couronne dentée liée cinématiquement avec le vilebrequin dudit moteur,
- déterminer de manière prédictive la durée de la phase d'accélération du pignon afin d'obtenir une vitesse de rotation dudit pignon correspondant à la vitesse de rotation de ladite couronne,
- une fois les vitesses de rotation dudit pignon et de ladite couronne étant synchronisées, réaliser l'engagement dudit pignon du démarreur (5) dans ladite couronne du moteur en alimentant le solénoïde (1),
- commuter ladite première voie commutée d'alimentation afin de fournir le courant maximal au moteur électrique du démarreur (5) entraînant ledit pignon pour réaliser le démarrage du moteur,
- une fois le moteur à combustion étant autonome par les combustions, réaliser le désengagement dudit pignon du démarreur (5) avec ladite couronne du moteur et couper toute alimentation au moteur électrique du démarreur (5).,
ces étapes n'étant réalisées que lorsque le moteur est ensuite relancé automatiquement lorsque l'utilisateur le sollicite à nouveau, dans une fonction communément appelée « Stop & Start ».

2. Procédé selon la revendication précédente, **caractérisé par le fait que** la vitesse de rotation de ladite couronne dentée est déterminée de manière prédictive en tenant compte des oscillations de la vitesse de rotation du vilebrequin du moteur dues aux cycles de compression et de détente par une correction correspondante, cette correction pouvant être proportionnelle avec la période desdites oscillations.

3. Procédé selon l'une des revendications précédentes, **caractérisé par le fait que** la durée de la phase d'accélération du pignon est déterminée en utilisant soit un tableau comportant des temps d'accélérations associés à la vitesse de rotation correspondante du pignon du démarreur (5) soit un modèle physique du démarreur.

4. Procédé selon la revendication précédente, **caractérisé par le fait que** la durée de la phase d'accélération du pignon est déterminée en tenant compte des facteurs influents sur le temps de montée en régime du démarreur (5), notamment la tension d'alimentation, la température du démarreur (5), l'état de la batterie (6).

5. Procédé selon l'une des revendications précédentes, **caractérisé par le fait qu'**avant de réaliser l'engagement dudit pignon du démarreur (5) dans ladite couronne du moteur en alimentant le solénoïde (1), le relais auxiliaire (2) situé le long de ladite deuxième voie commutée d'alimentation est ouvert afin de réaliser cet engagement sous couple nul.

6. Procédé selon l'une des revendications précédentes, **caractérisé par le fait que** les étapes de réaliser l'engagement dudit pignon du démarreur (5) dans ladite couronne du moteur et de commuter ladite première voie commutée d'alimentation sont réalisées par l'intermédiaire d'un solénoïde (1) à deux étages.

7. Application du procédé selon l'une des revendications précédentes dans un démarreur (5) pour un moteur à combustion, le procédé permettant de relancer le moteur avant que le vilebrequin du moteur ne soit au repos.

8. Application du procédé selon l'une des revendications précédentes 1 à 6 dans un véhicule à moteur à combustion.

## Patentansprüche

1. Verfahren zur Steuerung zum Betätigen einer Steuervorrichtung, die dazu bestimmt ist, in einem Starter (5) für einen Verbrennungsmotor integriert zu werden, wobei die Vorrichtung ein Magnetventil (1) aufweist, das die Position eines Ritzels des Starters (5) kontrolliert, das geeignet ist, in einen Zahnkranz einzuspuren, der kinematisch mit einer Kurbelwelle des Motors verbunden ist, wobei das Ritzel von einem Elektromotor des Starters (5) durch Schließen einer ersten geschalteten Versorgungsleitung zwischen einer Batterie (6) und dem Starter (5) angetrieben werden kann, wobei die Vorrichtung ferner ein Hilfsrelais (2) und mindestens einen Leistungswiderstand (3) aufweist, die in Reihe geschaltet werden, die eine zweite geschaltete Versorgungsleitung parallel zu der ersten geschalteten Leitung erstellen und ermöglichen, durch einen Speisestrom, der niedriger als der maximale Strom ist, den Elektromotor des Starters (5) mit Strom zu versorgen, der das Ritzel antreibt, **dadurch gekennzeichnet, dass** das Verfahren nach einer automatischen Abschaltung des Motors, wenn die Geschwindigkeit des Fahrzeugs null ist, die folgenden Schritte aufweist:
- Umschalten des Hilfsrelais (2), das entlang der zweiten geschalteten Versorgungsleitung angeordnet ist, um das Ritzel des Starters (5) zu beschleunigen, indem ein Strom, der niedriger als der maximale Strom ist, dem Elektromotor des Starters (5) zugeführt wird, der das Ritzel antreibt,
- prädikatives Bestimmen der Drehzahl des Zahnkranzes, der kinematisch mit der Kurbelwelle des Motors verbunden ist,
- prädikatives Bestimmen der Dauer der Beschleunigungsphase des Ritzels, um eine Drehzahl des Ritzels zu erhalten, die der Drehzahl des Kranzes entspricht,
- nachdem die Drehzahlen des Ritzels und des Kranzes synchronisiert sind, Durchführen des Einspurens des Ritzels des Starters (5) in den Kranz des Motors durch Versorgen des Magnetventils (1) mit Strom,
- Umschalten der ersten geschalteten Versorgungsleitung, um den maximalen Strom dem Elektromotor des Starters (5) zuzuführen, der das Ritzel antreibt, um das Anlassen des Motors durchzuführen,
- nachdem der Verbrennungsmotor durch die Verbrennungen autonom ist, Durchführen des Ausspurens des Ritzels des Starters (5) mit dem Kranz des Motors und Unterbrechen der gesamten Stromzufuhr zu dem Elektromotor des Starters (5),
wobei diese Schritte nur durchgeführt werden, wenn der Motor dann automatisch wieder gestartet wird, wenn der Benutzer ihn in einer Funktion, die allgemein Start-Stopp-Funktion genannt wird, wieder in Anspruch nimmt.

2. Verfahren nach dem vorhergehenden Anspruch, **dadurch gekennzeichnet, dass** die Drehzahl des Zahnkranzes unter Berücksichtigung der Schwingungen der Drehzahl der Kurbelwelle des Motors aufgrund der Kompressions- und Entspannungszyklen durch eine entsprechende Korrektur prädiktiv bestimmt wird, wobei diese Korrektur zu der Dauer der Schwingungen proportional sein kann.

3. Verfahren nach einem der vorhergehenden Ansprüche, **dadurch gekennzeichnet, dass** die Dauer der Beschleunigungsphase des Ritzels unter Verwendung von entweder einer Tabelle, die Beschleunigungszeiten aufweist, die mit der entsprechenden Drehzahl des Ritzels des Starters (5) verbunden sind, oder eines physikalischen Modells des Starters bestimmt wird.

4. Verfahren nach dem vorhergehenden Anspruch, **dadurch gekennzeichnet, dass** die Dauer der Beschleunigungsphase des Ritzels unter Berücksichtigung der Einflussfaktoren auf die Hochlaufzeit des Starters (5), insbesondere der Versorgungsspannung, der Temperatur des Starters (5), des Zustands der Batterie (6) bestimmt wird.

5. Verfahren nach einem der vorhergehenden Ansprüche, **dadurch gekennzeichnet, dass** vor dem Durchführen des Einspurens des Ritzels des Starters (5) in den Kranz des Motors durch Versorgen des Magnetventils (1) mit Strom das Hilfsrelais (2), das entlang der zweiten geschalteten Versorgungsleitung angeordnet ist, geöffnet wird, um dieses Einspuren bei Nullmoment durchzuführen.

6. Verfahren nach einem der vorhergehenden Ansprüche, **dadurch gekennzeichnet, dass** die Schritte zum Durchführen des Einspurens des Ritzels des Starters (5) in den Kranz des Motors und des Umschaltens der ersten geschalteten Versorgungsleitung durch ein zweistufiges Magnetventil (1) durchgeführt werden.

7. Anwendung des Verfahrens nach einem der vorhergehenden Ansprüche in einem Starter (5) für einen Verbrennungsmotor, wobei das Verfahren ermöglicht, den Motor neu anzulassen, bevor die Kurbelwelle des Motors in Ruheposition ist.

8. Anwendung des Verfahrens nach einem der vorhergehenden Ansprüche 1 bis 6 in einem Fahrzeug mit Verbrennungsmotor.

## Claims

1. Control method for activating a control device designed to be incorporated into a starter (5) for a combustion engine, the device comprising a solenoid (1) controlling the position of a pinion of the starter (5) suitable for being engaged in a ring gear kinematically associated with a crankshaft of said engine, said pinion being able to be driven by an electric motor of the starter (5) by closing a first switched power supply channel between a battery (6) and the starter (5), the device also comprising an auxiliary relay (2) and at least one power resistor (3) placed in series creating a second switched power supply channel in parallel with said first switched channel and making it possible to power, via a power supply current that is weaker than the maximum current, the electric motor of the starter (5) driving said pinion, **characterized in that** the method, after automatically switching off the engine when the vehicle speed is zero, comprises the steps of
- switching said auxiliary relay (2) situated along said second switched power supply channel in order to accelerate the pinion of the starter (5) by providing a lesser current than the maximum current to the electric motor of the starter (5) driving said pinion,
- determining in a predictive manner the rotation speed of the ring gear kinematically linked with the crankshaft of said engine,
- determining in a predictive manner the duration of the acceleration phase of the pinion in order to obtain a rotation speed of said pinion corresponding to the rotation speed of said ring,
- once the rotation speeds of said pinion and of said ring have been synchronized, carrying out the engagement of said pinion of the starter (5) in said ring of the engine by powering the solenoid (1),
- switching said first switched power supply channel in order to supply the maximum current to the electric motor of the starter (5) driving said pinion in order to start the engine,
- once the combustion engine is running independently via the combustions, carrying out the disengagement of said pinion of the starter (5) from said ring of the engine and disconnecting all power to the electric motor of the starter (5).
these steps being carried out only when the engine is subsequently restarted automatically when the user activates it again, in a functionality commonly called "Stop & Start".

2. Method according to the preceding claim, **characterized in that** the rotation speed of said ring gear is determined in a predictive manner by taking account of the oscillations of the rotation speed of the crankshaft of the engine due to the compression and expansion cycles through a corresponding correction, this correction being able to be proportional to the period of said oscillations.

3. Method according to either of the preceding claims, **characterized in that** the duration of the acceleration phase of the pinion is determined by using either a table comprising acceleration times associated with the corresponding rotation speed of the pinion of the starter (5) or a physical model of the starter.

4. Method according to the preceding claim, **characterized in that** the duration of the acceleration phase of the pinion is determined by taking account of the factors influencing the time for bringing the starter (5) up to operating speed, notably the power supply voltage, the temperature of the starter (5), the state of the battery (6).

5. Method according to one of the preceding claims, **characterized in that**, before engaging said pinion of the starter (5) in said ring of the engine by powering the solenoid (1), the auxiliary relay (2) situated along said second switched power supply channel is opened in order to achieve this engagement under zero torque.

6. Method according to one of the preceding claims, **characterized in that** the steps of engaging said pinion of the starter (5) in said ring of the engine and of switching said first switched power supply channel are carried out by means of a two-stage solenoid (1).

7. Application of the method according to one of the preceding claims in a starter (5) for a combustion engine, the method making it possible to restart the engine before the crankshaft of the engine is at rest.

8. Application of the method according to one of the preceding Claims 1 to 6, in a vehicle with a combustion engine.
